(19) Europäisches Patentamt
European Patent Office
Office européen des brevets

(11) Publication number: **0 303 121**
**A1**

# (12) EUROPEAN PATENT APPLICATION

(21) Application number: **88112324.4**

(51) Int. Cl.4: **F16D 43/20**

(22) Date of filing: **29.07.88**

(30) Priority: **14.08.87 GB 8719292**

(43) Date of publication of application:
**15.02.89 Bulletin 89/07**

(84) Designated Contracting States:
**DE FR GB IT NL**

(71) Applicant: **BRITISH AUTOGARD LIMITED**
**Barton Lane**
**Cirencester Gloucestershire, GL7 2ED(GB)**

(72) Inventor: **Fortune, David John**
**102 Broadmoor Lane Weston**
**Bath Avon BA1 4LB(GB)**

(74) Representative: **Leach, John Nigel et al**
**FORRESTER & BOEHMERT**
**Widenmayerstrasse 4/I**
**D-8000 München 22(DE)**

## (54) Torque limiting clutch.

(57) A torque transmitting clutch with coaxial driving and driven members (10,11) partly one within the other; has torque transmitting elements (18) radially moveable in apertures (17) in the outer member, and urged into al abutments (16) in the inner member by an axially moveable spring (21) biased ring (19), except when disengaged. A resetting ring (40) co-operates with at least one timing element (50) for holding the members (10,11) with the apertures (17) and abutments (16) aligned.

FIG 1
A
13
11
56
12
50
54
53
41
40
52
55
51
57
58
60
17
42
44
23
19
43
21
20
22
10
123
24
14
16
18

EP 0 303 121 A1

## Torque Limiting Clutch.

This invention relates to a torque limiting clutch.

An object to the invention is to provide a new and improved torque limiting clutch.

According to the present invention we provide a torque limiting clutch comprising a driving member and a driven member mounted at least partly one within the other for relative rotational movement about an axis and having mutually registerable torque transmitting abutments engagable with torque transmitting elements and resilient loading means for releasably retaining said elements and abutments in torque transmitting engagement with one another, the torque transmitting elements being movable in a direction transverse to said axis out of torque transmitting engagement with said members by movement of a loading member in a direction parallel to said axis against the bias of said loading means.

The radial position of each torque transmitting element in a disengaged position is preferably such that the reaction force of the loading means acting thereon maintains the torque transmitting element out of engagement with the torque transmitting abutment in one of said members after the clutch has become disengaged.

Said one member may be the inner member.

Re-setting means may be provided to move each torque transmitting element to a re-setting position which is radially inwardly of said disengaged position such that the reaction force of the loading means biases the torque transmitting element into position for engagement with the torque transmitting abutment in the inner member.

The re-setting means may comprise a first surface portion with which the torque transmitting elements are engaged when the re-setting means is in a disengaged position, of greater radius than a second surface portion, with which the torque transmitting elements are engaged when the re-setting means is moved to a re-setting position.

The re-setting means may be movable parallel to said axis between said disengaged and re-setting positions.

At least one timing element may be provided on one of said members engagable with an associated timing abutment provided on the other member whereby the or each timing element and its associated abutment are engagable only when the members are in a pre-determined mutual angular relationship about said axis.

The or each timing element may be disposed in an outer member and be normally resiliently biased radially outwardly out of engagement with an associated timing abutment provided on an inner member, means being provided, for use during re-setting of the torque limiter, to move the or each timing element inwardly into engagement with an associated timing abutment.

The means may comprise a third surface portion of the re-setting means adapted to permit the or each timing element to move outwardly out of engagement with an associated timing abutment when the re-setting means is in the disengaged position and to move the timing element inwardly into engagement with an associated timing abutment when the re-setting means is moved to the re-setting position.

The resilient biasing of the or each timing element may cause the or each timing element to exert a reaction force on said resetting means, when the resetting means is in said resetting position, to move the resetting means towards said disengaged position.

Alternatively, the or each timing element may be disposed in an outer member and be normally resiliently biased radially inwardly into engagement with an associated timing abutment provided on said inner member, release means being provided to move the or each timing element out of engagement with an associated timing abutment on disengagement of the clutch.

Said release means may comprise cooperating surface parts of the or each timing element and the inner member which cause a reaction force to act on the or each timing element to move the or each timing element out of engagement with the associated timing abutment on relative rotation between the clutch members on disengagement of the clutch.

The outward movement of the or each timing element, as a result of said reaction force, may exert a reaction force on said resetting means, when the resetting means is in the resetting position, to move the resetting means towards said disengaged position.

The maintenance of the torque transmitting elements out of torque transmitting engagement with the torque transmitting abutments in the inner member in the disengaged position of the clutch ensures that on continued relative rotation between the driving and driven members after disengagement of the clutch the torque transmitting elements are maintained out of engagement with the torque transmitting abutments on the inner member thereby avoiding wear and clatter. Movement of the resetting member displaces the torque transmitting elements to a re-setting position where they are biased towards engagement with the torque abutments of the inner member by the resilient loading means so that when the torque transmitting abutments of the inner and outer members become angularly registered the torque transmitting elements move into torque transmitting engagement therewith under the bias of the resilient loading means.

When the above described timing elements are provided they prevent movement of the re-setting member to its re-setting position unless the or each timing element is angularly registered with its associated timing abutment.

An embodiment of the invention is illustrated in the accompanying drawings wherein,

FIGURE 1 is a longitudinal cross-sectional view through a torque transmitting clutch embodying the invention, the parts being depicted with the clutch in the engaged or torque transmitting position,

FIGURE 2 is a fragmentary view of a portion of Figure 1 but with the parts shown immediately after re-engagement,

FIGURE 3 is a view similar to that of Figure 2 but showing the parts with the clutch disengaged,

FIGURE 4 is a view similar to that of Figure 2 but showing the parts during re-setting, and

FIGURE 5 is a view similar to that of Figure 2 but of a modification of the invention.

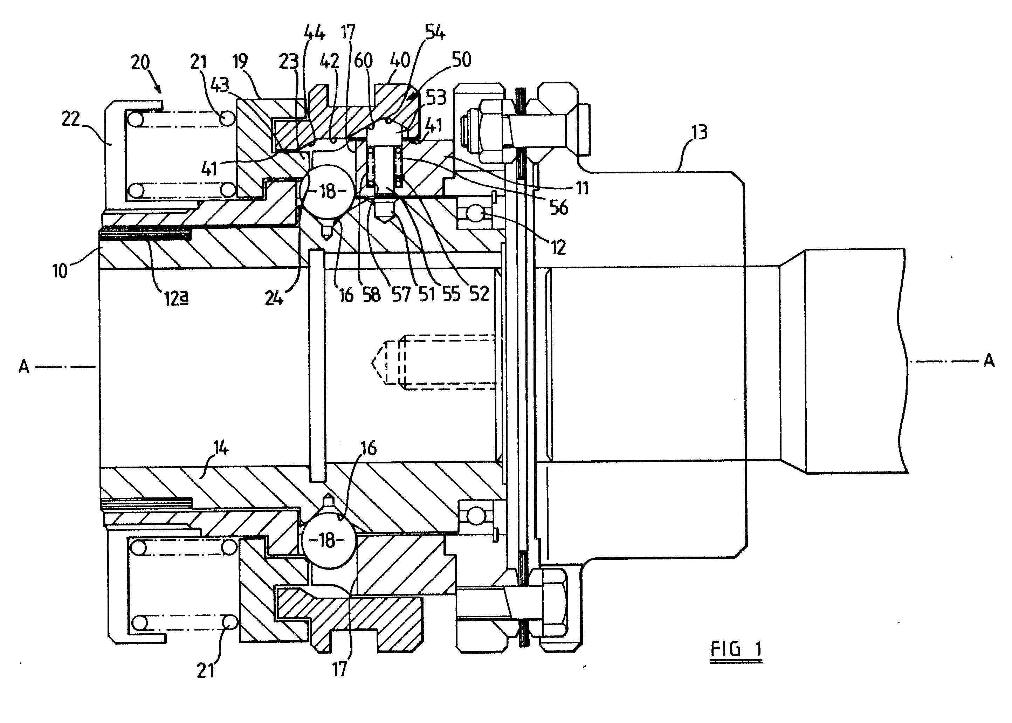

Referring to Figure 1, a torque transmitting clutch is shown comprising concentrically disposed driving and driven members 10, 11 respectively. The driven member 11 is mounted around a portion of the driving member 10 for relative rotational movement about a longitudinal axis A-A by means of a ball race 12 and bearing 12a.

A driven hub 13 is bolted to the driven member 11 and is connected by a suitable means to the apparatus to be driven by the torque transmitting clutch. The inner or driving member 10 is provided with a key way, not shown, for connection to an input shaft, not shown. Of course, if desired, the driving and driven members may be connected to input and output members in other ways than those described hereinbefore and the precise configuration of the driving and driven members may be chosen to suit the application concerned. If desired roles of the members 10 and 11 may be reversed

The driving member 10 is provided with a plurality of torque transmitting abutments 16 in the form of frusto-conical recesses. In the present example 18 equally circumferential spaced torque transmitting abutments 16 are provided. A corresponding number of torque transmitting abutments 17 are formed in the driven member 11 and comprise cylindrical openings which are arranged to be mutually registerable with the abutments 16. A corresponding number of torque transmitting elements, in the present example in the form of spherical balls 18, are disposed so as to be partially within the frusto-conical recesses 16 and partially within the cylindrical openings 17 during normal torque transmittal as shown in Figure 1. The balls 18 are held in torque transmitting engagement with the torque transmitting abutments 16, 17 by means of a loading member 19 of a resilient loading means 20 comprising a plurality of coil compression springs 21 compressed between the loading member 19 and an adjusting nut 22 threadedly engaged with the driven member 11. By rotating the nut 22 to move it axially of the driven member 11 the force exerted by the compression springs 21 on the loading member 19 may be adjusted so that the torque at which the clutch disengages may be adjusted.

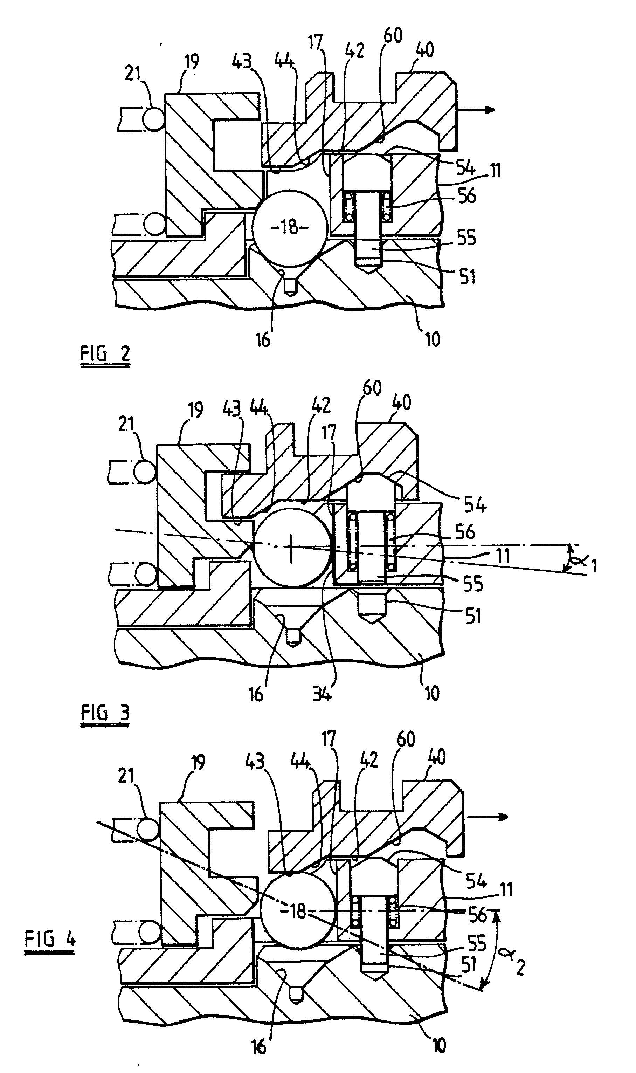

The loading member 19 is provided with an annular nose portion 23 having a circumferentially extending surface portion 24 of part circular configuration of a radius corresponding to the radius of the balls 18. The disposition of the components is such that the resultant force acting on the balls 18 when they are in torque transmitting engagement with the abutments 16 and 17 is such that the springs 21 maintain the balls in engagement with both abutments until the torque exceeds a predetermined torque. When this occurs the balls 18 roll out of the torque transmitting abutments 16 and force the loading member 19 to the left in Figure 1 against the bias of the spring 21 so as to move to a disengaged position as shown in Figure 3. In this position the angle $\alpha_1$ shown in Figure 3 is such that the tangent of the angle is less than $\mu$, the coefficient of friction between the balls 18 and the thrust member 19. Consequently, the balls 18 are retained in their disengaged position by virtue of being trapped between the loading member 19 and the side 34 of the openings 17.

In order to re-set the clutch a re-setting member 40 is provided in the form of an axially slidable sleeve mounted for sliding movement on the loading member 19 and the driven member 11 by cooperating bearing surfaces 41. If desired linear ball roller bearings may be provided.

The re-setting member 40 has a first surface portion 42 which is axially aligned with the balls 18 when the re-setting member 40 is in a disengaged position as shown in Figures 1 and 3 and is at a radial disposition to permit of the balls 18 moving to the position shown in Figure 3.

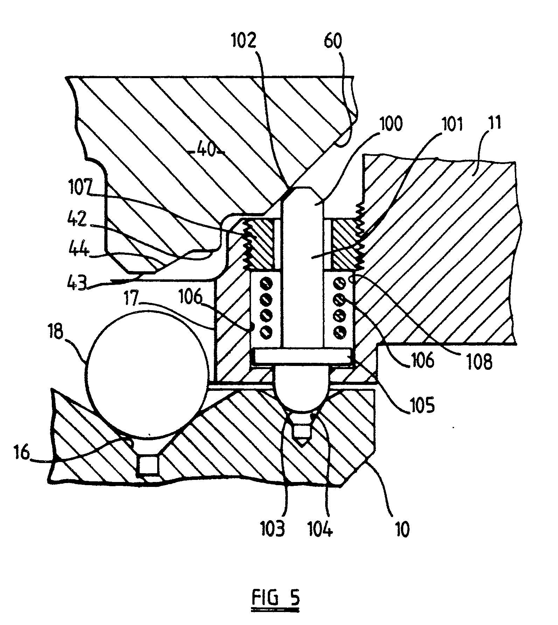

When it is desired to re-set the clutch the resetting member 40 is moved to the right from the position shown in Figure 3 to bring a second surface portion 43 of smaller radial dimension than the portion 42 and connected thereto by an intermediate inclined or cam portion 44 into axial alignment with the balls 18. This causes the balls 18 to be displaced partially radially inwardly to the position shown in Figure 4. In this position the tangent of

the angle $\alpha_2$ is greater than $\mu$ and therefore the coil springs 21 can urge the loading member 19 to the left to displace the balls 18 radially inwardly into torque transmitting relationship with the abutments 16.

Thereafter, the re-setting member 40 is moved to the left from the position shown in Figure 4 to that shown in Figures 1 and 3 so that it is in position to permit of the balls 18 moving out of engagement with the torque transmitting abutments 16 when the clutch next disengages.

It may be preferred, and as illustrated in the present embodiment, that means are provided to ensure that the clutch is re-engaged only when the driving and driven members are in a pre-determined angular relationship.

This is achieved by providing the driven member 11 with a plurality of timing elements 50 and the driving member 10 with a plurality of associated timing abutments 51. In the present example 10 timing elements and associated abutments are provided at unequally spaced positions so that the elements and associated abutments can be inter-engaged only in a unique angular relationship between the driving and driven members.

The timing elements 50 each comprise a spring loaded plunger 52 having a head 53 with a frusto-conical end surface 54 and a shank 55 which is engagable within the associated timing abutment 51 which comprises a generally cylindrical recess in the driving member 10. A coil compression spring 56 is disposed between the underside of the head 53 and the base 57 of a cylindrical pocket 58 formed to extend radially inwardly of the driven member 11.

The re-setting member 40 is provided with a third surface portion 60 at an inclination corresponding to that of the frusto-conical surface 54 of the timing elements for engagement therewith.

When the clutch is in its driving position shown in Figure 1 the third surface portion 60 is positioned so that the timing plungers are disposed in a radially outer most position shown in Figure 1 in which the shanks 55 are disengaged from the abutments 51 thereby permitting relative rotation between the clutch members 10, 11 when the torque exceeds a pre-determined torque as hereinbefore described.

When the re-setting member 40 is moved to the right from the position shown in Figure 1 and Figure 3 to the position shown in Figure 4 the third surface 60 engages the surface 54 of the timing plungers and displaces them inwardly to the position shown in Figures 2 and 4 if, but only if, the driving and driven members 11, 12 are angularly orientated so that the associated timing abutments 51 are registered with the path of movement of the shanks 55. Therefore, it is necessary to rotate the clutch members 10, 11 until they are thus aligned, as conveniently indicated, for example, by suitable timing marks provided thereon, before moving the re-setting member 40 to the re-setting position. With the clutch members 10, 11 thus aligned when the re-setting member 40 is moved from the disengaged position to the re-setting position the timing elements 50 can be moved radially inwardly by the surface 60 thus permitting movement of the timing member 40 fully to the re-setting position so that the surfaces 44 and 43 displace the balls 18 to the position shown in Figure 4 so that they are then moved into torque transmitting engagement by the loading member 19 as hereinbefore described.

After the clutch has been thus re-set and the drive to move the re-setting element 40 to the right in Figure 1 removed the springs 56 acting on the timing elements 50 cause the re-setting member 40 to be moved to the left from the position shown in Figure 2 to its disengaged position as a result of a reaction force acting between the surfaces 54 and 60 so that the timing elements 50 are disengaged from the timing abutments 51 and the first surface portion 42 of the re-setting member 40 is axially aligned with the balls 18 so that they can be moved out of disengagement with the torque transmitting abutments 16 if the torque again exceeds the pre-determined torque.

The re-setting member 40 may be moved from its disengaged position to its re-setting position by a manual drive means or by means of a suitable mechanical drive means such as a pneumatic or hydraulic cylinder, electric motor or any other suitable mechanism.

In Figure 5 there is shown a modification of the embodiment shown in Figures 1 to 4. In this embodiment the clutch is the same as previously described except for the timing elements and abutments and the same reference numerals have been used to refer to corresponding parts. Figure 5 shows the parts in the same condition as that of Figure 2 which in this embodiment means that the parts are also illustrated in the same condition as is shown in Figure 1.

In Figure 5 the timing element 100 comprises a shank 101 having an outer end part with a frusto-conical configuration 102 and an inner end part with a spherical configuration 103 for engagement with a frusto-conical timing abutment 104 in the driving member 10. The shank 101 is provided with a radially outwardly extending shoulder 105 and a coil compression spring 106 is engaged between the shoulder 105 and a plug 107 threadedly received in the outer end of a radial pocket 108 formed in the driven member 11. In this embodiment the timing elements 100 are normally biased inwardly into engagement with their associated timing abutment 104. Thus, when the re-setting member 40 is moved to the re-setting position it remains in the re-setting position since there is no bias provided, at this stage, by the re-setting elements 100 to return it to the disengaging position.

When the clutch senses a torque greater than the pre-determined torque so that relative rotation between the driving and driven members occurs, as a result of the balls 18 rolling out of the torque transmitting abutments 16, a resultant force acts on the hemispherical end 103 of the shank 101 to move the timing elements 101 radially outwardly so that reaction between the surfaces 102 thereof and the surface 60 of the re-setting member 40 creates a reaction force which moves the re-setting member 40 to the left from the position shown in Figure 5 to the engaged position. It will be appreciated that there is sufficient distance between the second surface part 43 of the member 40 and the balls 18 to permit them to move out of the torque transmitting abutments 16 sufficiently for relative rotation to occur between the driving and driven member 10, 11 to a sufficient extent that the timing elements 10 move the re-setting member 40 to the disengaged position prior to the balls 16 being moved to their fully dis-engaged position.

The features disclosed in the foregoing description, or the accompanying drawing, expressed in their specific forms or in terms of a means for performing the disclosed function, or a metal or process for attaining the disclosed result, or a class or group of substances or compositions, as appropriate, may, separately or any combination of such features, be utilised for realising the invention in diverse forms thereof.

## Claims

1. A torque limiting clutch comprising a driving member and a driven member mounted at least partly one within the other for relative rotational movement about an axis and having mutually registerable torque transmitting abutments engagable with torque transmitting elements and resilient loading means for releasably retaining said elements and abutments in torque transmitting engagement with one another, the torque transmitting elements being movable in a direction transverse to said axis out of torque transmitting engagement with said members by movement of a loading member in a direction parallel to said axis against the bias of said loading means.

2. A clutch according to Claim 1 wherein the radial position of each torque transmitting element in a disengaged position is such that the reaction force of the loading means acting thereon maintains the torque transmitting element out of engagement with the torque transmitting abutment in one of said members after the clutch has become disengaged.

3. A clutch member according to Claim 2 wherein said member is the inner member.

4. A clutch according to Claim 3 wherein re-setting means is provided to move each torque transmitting element to a re-setting position which is radially inwardly of said disengaged position such that the reaction force of the loading means biases the torque transmitting element into position for engagement with the torque transmitting abutment in the inner member.

5. A clutch according to Claim 4 wherein the re-setting means comprises a first surface portion with which the torque transmitting elements are engaged when the re-setting means is in a disengaged position, of greater radius than a second surface portion, with which the torque transmitting elements are engaged when the re-setting means is moved to a re-setting position.

6. A clutch according to Claim 5 wherein the the re-setting means is movable parallel to said axis between said disengaged and re-setting positions

7. A clutch according to any one of the preceding claims wherein at least one timing element is provided on one of said members engagable with an associated timing abutment provided on the other member whereby the or each timing element and its associated abutment are engagable only when the members are in a pre-determined mutual angular relationship about said axis.

8. A clutch according to Claim 7 wherein the or each timing element is disposed in an outer member and is normally resiliently biased radially outwardly out of engagement with an associated timing abutment provided on an inner member, means being provided, for use during re-setting of the torque limiter, to move the or each timing element inwardly into engagement with an associated timing abutment.

9. A clutch according to Claim 8 when dependent on Claim 5 or Claim 6 wherein the means comprises a third surface portion of the re-setting means adapted to permit the or each timing element to move outwardly out of engagement with an associated timing abutment when the re-setting means is in the disengaged position and to move the timing element inwardly into engagement with an associated timing abutment when the re-setting means is moved to the re-setting position.

10. A clutch according to Claim 9 wherein said resilient biasing of the or each timing element causes the or each timing element to exert a reaction force on said resetting means, when the resetting means is in said resetting position, to move the resetting means towards said disengaged position.

11. A clutch according to Claim 7 wherein the or each timing element is disposed in an outer member and is normally resilient by biased radially inwardly into engagement with an associated timing abutment provided on said inner member, release means being provided to move the or each timing element out of engagement with an associated timing abutment on disengagement of the clutch.

12. A clutch according to Claim 11 wherein said release means comprises cooperating surface parts of the or each timing element and the inner member which cause a reaction force to act on the or each timing element to move the or each timing element out of engagement with the associated timing abutment on relative rotation between the clutch members on disengagement of the clutch.

13. A clutch according to Claim 12 when dependent upon any one of Claims 4 to 6 wherein outward movement of the or each timing element, as a result of said reaction force, exerts a reaction force on said resetting means, when the resetting means is in the resetting position, to move the resetting means towards said disengaged position.

20
21
19
23
44
17
42
60
40
54
50
53
41
43
22
41
13
11
56
12
10
12a
24
16
58
57
51
55
52
A
A
14
16
18
18
21
17
FIG 1

21
19
43
44
17
42
60
40
54
11
56
-18-
55
51
16
10
FIG 2
21
19
43
44
42
60
40
17
54
56
11
$\alpha_1$
55
51
16
34
10
FIG 3
21
19
43
44
17
42
60
40
54
11
-18
56
55
51
$\alpha_2$
16
10
FIG 4

102
60
100
101
11
40
107
42
44
43
17
106
18
106
108
105
16
103
104
10

FIG 5

European Patent Office

# EUROPEAN SEARCH REPORT

Application Number

EP 88 11 2324

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 429 929 (WALTERSCHEID) * Pages 9,10; figure 2 * | 1-4 | F 16 D 43/20 |
| Y | | 5-7 | |
| X | FR-A-2 316 476 (DUC) * Whole document * | 1,2 | |
| Y | | 5,6 | |
| Y | GB-A-2 013 462 (VAN DER LELY) * Page 3, figure 9 * | 7 | |
| A | | 8 | |
| X | GB-A-2 023 031 (MANYO TOOL) * Pages 2,3, figures 9,10 * | 1-4,7 | |
| Y | | 5,6 | |
| Y | FR-A-2 080 118 (SNECMA) * Whole document * | 5,6 | |
| X | GB-A-1 239 540 (OVERLOAD DEVICES) * Whole document * | 1-3 | TECHNICAL FIELDS SEARCHED (Int. Cl.4) |
| X | GB-A-1 185 007 (VAWSER) * Whole document * | 1-3 | F 16 D 43/00 |
| X | US-A-3 132 730 (DAHLSTRAND) * Whole document * | 1-3 | |
| P,X | EP-A-0 260 240 (S. MASKIN et al.) * Whole document * | 1-3 | |
| P,X | US-A-4 744 447 (KATO) * Whole document * | 1-3 | |

The present search report has been drawn up for all claims

| Place of search | Date of completion of the search | Examiner |
|---|---|---|
| THE HAGUE | 14-11-1988 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)